# EUROPÄISCHE PATENTSCHRIFT

(11) **EP 0 953 520 B1**
(45) Veröffentlichungstag und Bekanntmachung des Hinweises auf die Patenterteilung: **03.07.2002**
(21) Anmeldenummer: 98890371.2
(22) Anmeldetag: 16.12.1998
(51) Int. Cl.: B65G 1/14, B65G 57/00, F26B 25/18

(54) **Stapelleiste für gestapeltes Schnittholz**
Separator for lumber stacking
Latte intercalaire d'empilage de bois

(30) Priorität: 21.04.1998 AT 26498 U
(43) Veröffentlichungstag der Anmeldung: 03.11.1999
(73) Patentinhaber: Schweitzer, Johann, 4076 St. Marienkirchen (AT)
(72) Erfinder: Schweitzer, Johann, 4076 St. Marienkirchen (AT)
(74) Vertreter: Hübscher, Gerhard, Dipl.-Ing.

(56) Entgegenhaltungen:
- EP-A- 0 778 222
- WO-A-97/08505

## Beschreibung

Die Erfindung bezieht sich auf eine Stapelleiste aus einem hölzernen Leistenkörper mit zur Längsrichtung schrägverlaufenden Auflagerippen an der Oberund Unterseite

Eine derartige Stapelleiste ist aus WO-A-9 708 505 bekannt.

Stapelleisten dienen bei der Holztrocknung zum gegenseitig beabstandeten Aufeinanderstapeln von Holz, um eine möglichst gleichmäßige Belüftung der Holzstapel zu erreichen, wobei die Zwischenräume zwischen den einzelnen Auflagerippen der Stapelleisten auch im Leistenbereich eine Luftzirkulation mit sich bringen und die schrägverlaufenden Auflagerippen gegenüber querverlaufenden Auflagerippen eine vergrößerte und vergleichmäßigte Abstützung der zu trocknenden Holzlagen bieten. Die bekannten Stapelleisten bestehen nun aus einem Vollholz-Leistenkörper, an dessen Ober- und Unterseite mittels einer Kammfräsung die Auflagerippen spanabhebend herausgearbeitet sind. Abgesehen vom Herstellungsaufwand können diese Auflagerippen hohen Druckbelastungen, wie sie bei höheren Holzstapeln bei den unteren Stapelleisten auftreten, kaum standhalten, so daß die Lebensdauer dieser Leisten recht beschränkt und ein verhältnismäßig häufiger Austausch der Leisten notwendig ist. Dazu kommt noch, daß die Stapelleisten wegen des Vollholz-Leistenkörpers nur bei gleichen oder mit dem Leistenholz verträglichen Hölzern eingesetzt werden können, um Holzverfärbungen durch Feuchtigkeits- und Gerbstoffeinflüsse im Berührungsbereich zwischen Stapelleisten und zu trocknendem Holz zu vermeiden.

Der Erfindung liegt daher die Aufgabe zugrunde, eine Stapelleiste der eingangs geschilderten Art zu schaffen, die sich bei vergleichsweise rationeller Herstellung durch ihre Druckbelastbarkeit und damit durch ihre Lebensdauer auszeichnet und die Voraussetzung für eine qualitativ einwandfreie, schnelle und oberflächenschonende Holztrocknung bietet.

Die Erfindung löst diese Aufgabe dadurch, daß der Leistenkörper aus wellenförmig verpreßtem Lagenholz besteht, wobei die Wellenform eine gerade, zur Längsrichtung schrägverlaufende Erzeugende besitzt und die ober- und unterseitigen Wellenberge die Auflagerippen bilden. Lagenholz ist ein aus mehreren Holzschichten verleimter Werkstoff, der gegenüber Vollholz wegen des geringeren Einflusses der örtlichen Holzfehler od. dgl. verbesserte physikalische und mechanische Eigenschaften aufweist und in seinen Festigkeitseigenschaften durch geeignete Anordnung der Einzellagen an die jeweiligen Belastungsverhältnisse angepaßt werden kann. Zusätzlich wird das Lagenholz durch das Verpressen verdichtet, was zur gewünschten hohen Druckbelastbarkeit führt. Die Wellenform des Leistenkörpers selbst ergibt ausreichend große Durchlüftungsöffnungen im Bereich der Wellentäler und gleichzeitig durch die Wellenberge ordnungsgemäße Auflagerippen, so daß der Leistenkörper seine Funktion als Distanzhalter zwischen den zu trocknenden Hölzern bestens erfüllen kann. Zusätzlich sind durch die verleimten und verpreßten Holzlagen die Feuchtigkeitsund Gerbstoffanteile u. dgl. in den Leistenkörpern so herabgesetzt, daß keinerlei Verfärbung der zu trocknenden Hölzer unabhängig von der jeweiligen Holzart im Stapelleistenbereich zu befürchten ist. Nicht zuletzt läßt sich die Stapelleiste rationell durch einen Preßvorgang ohne Spanverluste fertigen und als Stapelleisten für die verschiedensten zu trocknenden Hölzer einsetzen, wobei die Dimensionierung der Stapelleisten in weitesten Bereichen frei wählbar bleibt.

Besonders vorteilhaft ist es, wenn der Leistenkörper mit einer oberen und unteren Deckschicht aus feuchtigkeitsundurchlässigem Material, vorzugsweise Melamin, versehen ist, da diese Deckschichten eine Schutzschicht bildet, die eine Einwirkung von Feuchtigkeit, Gerbstoffen od. dgl. organischen Substanzen aus den Stapelleisten auf die zu trocknenden Hölzer sicher ausschließt. Dabei lassen sich die Deckschichten im Zuge der Leistenherstellung praktisch ohne Mehraufwand aufbringen und es entsteht eine langlebige, allgemein mit besten Ergebnissen einsetzbare Stapelleiste.

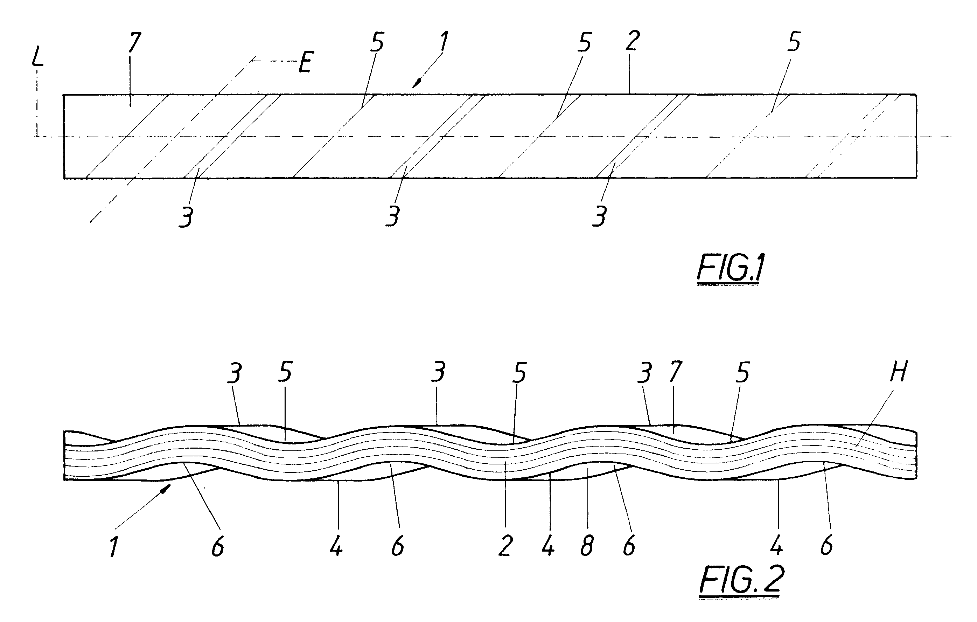

In der Zeichnung ist der Erfindungsgegenstand beispielsweise veranschaulicht. und zwar zeigen
- Fig. 1 und 2: ein Stück einer erfindungsgemäßen Stapelleiste in schematischer Draufsicht bzw. Seitenansicht.

Eine Stapelleiste 1 weist einen aus wellenförmig verpreßtem Lagenholz H bestehenden Leistenkörper 2 auf, dessen Wellenform eine gerade, zur Längsrichtung L schrägverlaufende Erzeugende E besitzt. Die Wellenberge 3 an der Oberseite und die Wellenberge 4 an der Unterseite bilden Auflagerippen für das zu stapelnde Holz und die ober- und unterseitigen Wellentäler 5, 6 dienen als Belüftungsöffnungen. Der Leistenkörper 2 ist mit einer oberen und unteren Deckschicht 7, 8 aus Melamin versehen.

Durch das verpreßte Lagenholz und die oberen und unteren Deckschichten entsteht eine hochbelastbare, langlebige Stapelleiste, die sich bei den unterschiedlichsten Holzarten ohne jede Gefahr einer Beeinträchtigung der Oberflächenqualität des zu trocknenden Holzes einsetzen läßt.

## Patentansprüche

1. Stapelleiste (1) aus einem hölzernen Leistenkörper mit zur Längsrichtung (L) schrägverlaufenden Auflagerippen (3, 4) an der Ober- und Unterseite, **dadurch gekennzeichnet, daß** der Leistenkörper (2) aus wellenförmig verpreßtem Lagenholz (H) besteht, wobei die Wellenform eine gerade, zur Längsrichtung (L) schrägverlaufende Erzeugende (E) besitzt und die ober- und unterseitigen Wellenberge (3, 4) die Auflagerippen bilden.

2. Stapelleiste nach Anspruch 1, **dadurch gekennzeichnet, daß** der Leistenkörper (2) mit einer oberen und unteren Deckschicht (7, 8) aus feuchtigkeitsundurchlässigem Material, vorzugsweise Melamin, versehen ist.

## Claims

1. A stacking batten (1) consisting of a wooden batten member with support ribs (3, 4) on the top and underside, said ribs extending at an angle to the longitudinal direction (L), **characterised in that** the batten member (2) consists of plywood (H) pressed into a corrugated shape, the corrugated shape having a straight generatrix (E) extending at an angle to the longitudinal direction (L), and the corrugation crests (3, 4) on the top and underside form the support ribs.

2. A stacking batten according to claim 1, **characterised in that** the batten member (2) is provided with a top and bottom covering (7, 8) consisting of moisture-impermeable material, preferably melamine.

## Revendications

1. Latte intercalaire d'empilage (1) formée d'un corps en latte de bois, avec des nervures de pose (3, 4) s'étendant obliquement par rapport à la direction longitudinale (L) sur la face supérieure et inférieure, **caractérisée en ce que** le corps de latte (2) est formé d'un bois stratifié (H) comprimé à une forme ondulée, la forme d'ondulation ayant une génératrice (E) rectiligne, s'étendant obliquement par rapport à la direction longitudinale (L), et les sommets d'ondulation (3, 4) situés côté supérieur et inférieur forment les nervures de pose.

2. Latte intercalaire d'empilage selon la revendication 1, **caractérisée en ce que** le corps de latte (2) est muni d'une couche de recouvrement supérieure et inférieure (7, 8) en matériau imperméable à l'humidité, de préférence en mélamine.
